# EUROPÄISCHE PATENTSCHRIFT

(11) **EP 3 864 316 B1**
(45) Veröffentlichungstag und Bekanntmachung des Hinweises auf die Patenterteilung: **09.02.2022**
(21) Anmeldenummer: 19817611.7
(22) Anmeldetag: 02.12.2019
(51) Int. Cl.: F16D 65/12, B60B 27/00

(54) **BREMSSCHEIBENANORDNUNG**
BRAKE DISK ARRANGEMENT
ENSEMBLE FORMANT DISQUE DE FREIN

(30) Priorität: 05.12.2018 DE 102018131016; 06.05.2019 DE 202019102518 U
(43) Veröffentlichungstag der Anmeldung: 18.08.2021
(73) Patentinhaber: SAF-HOLLAND GmbH, 63856 Bessenbach (DE)
(72) Erfinder: HARTMANN, Mark, 63834 Sulzbach am Main (DE)
(74) Vertreter: Müller Schupfner & Partner Patent- und Rechtsanwaltspartnerschaft mbB
(86) Internationale Anmeldenummer: PCT/EP2019/083225
(87) Internationale Veröffentlichungsnummer: WO 2020/114931

(56) Entgegenhaltungen:
- EP-A1- 2 543 905
- DE-A1- 10 246 939
- DE-A1-102014 107 228

## Beschreibung

Die Erfindung betrifft eine Nabe, eine Bremsscheibenanordnung, insbesondere für Nutzfahrzeuge, sowie eine Bremsscheibe und eine Nabe für eine solche Bremsscheibenanordnung.

Bremsscheibenanordnungen sind bereits aus dem Stand der Technik bekannt, diese dienen dazu, ein mit der Bremsscheibe verbundenes Rad zu bremsen. Die aus dem Stand der Technik bekannten Bremsscheibenanordnungen, insbesondere bei Nutzfahrzeugen, sind entweder derart gestaltet, dass diese einen besonders langen Nabenkorpus oder eine besonders lange Bremsscheibenanbindung aufweisen. Diese Bremsscheibenanordnungen aus dem Stand der Technik, insbesondere von Nutzfahrzeugen, weisen daher den Nachteil auf, dass diese äußerst schwer sind und einen hohen Bauraumbedarf aufweisen.

Die DE 10 2014 107 228 A1 betrifft eine Bremsscheiben- bzw. eine Nabenverbindung, wobei eine Nabe sich in axialer Richtung von einem Radflansch der Nabe erstreckende Mitnehmer aufweist, die zwischen am inneren Umfang einer Bremsscheibe sich in Richtung der Drehachse erstreckende angeordnete Stützelemente zahnartig eingreifen, wobei seitliche Flanken der Mitnehmer radial zur Drehachse und seitliche Flanken der Stützelemente parallel zu den seitliche Flanken der Mitnehmer ausgerichtet sind, wobei die seitlichen Flanken jedes der Mitnehmer von der Drehachse aus betrachtet in einem Winkel von 20° bis 30° zueinander ausgerichtet sind.

Die EP 2 543 905 A1 betrifft eine Bremsenanordnung mit einer Nabe, einem Rotor und einem Montageclip.

Die DE 102 46 939 A1 gibt eine neue Art von Befestigung einer Bremsscheibe an einer Radnabe eines Nutzfahrzeugs, wie Lastkraftwagen oder Omnibusen, an. Dabei weißt die Radnabe einen Flansch auf, an dem die Bremsscheibe abstützbar und befestigbar ist.

Es ist daher Aufgabe der vorliegenden Erfindung eine Bremsscheibenanordnung bereitzustellen, welche besonders bauraumsparend und leicht ist.

Diese Aufgabe wird mit einer Bremsscheibenanordnung gemäß Anspruch 1 gelöst. Weitere vorteilhafte Ausführungsformen ergeben sich aus den Unteransprüchen, der Beschreibung sowie aus den Figuren.

Mit Bezug zu der Bremsscheibenanordnung ist eine Nabe vorgesehen, insbesondere Nutzfahrzeugradnabe, wobei die Nabe dazu ausgelegt ist, um eine Rotationsachse in Umfangsrichtung zu rotieren, wobei die Nabe eine Verbindungsfläche und eine Verbindungsöffnung aufweist, wobei die Verbindungsöffnung dazu ausgelegt ist, zumindest teilweise ein Verbindungsmittel aufzunehmen, wobei die Verbindungsfläche dazu ausgelegt ist, mittelbar und/oder unmittelbar mit einer Anlagefläche einer Bremsscheibe zu kontaktieren, wobei die Verbindungsfläche verbindungsöffnungsfrei ausgebildet ist. Die Nabe dient insbesondere dazu, rotatorisch um eine Welle oder Achse gelagert zu sein. Die erfindungsgemäße Nabe kann insbesondere eine Radnabe bzw. besonders bevorzugt eine Nutzfahrzeugradnabe sein. Eine Nutzfahrzeugradnabe bezeichnet in diesem Zusammenhang insbesondere eine Nabe, die an einem Nutzfahrzeug derart angeordnet ist oder anordenbar ist und in der Lage ist, die bei einem Nutzfahrzeug auftretenden Radlasten aufzunehmen. Ein Nutzfahrzeug im Sinne der Erfindung ist insbesondere ein straßengebundenes Fahrzeug, welches ein Gesamtgewicht von über 3,5 t, bevorzugt von mehr als 7,5 t und besonders stark bevorzugt von mehr als 15 t aufweist. Vorteilhafterweise ist das Nutzfahrzeug insbesondere zum Transport von beispielsweise Personen oder Gütern geeignet und/oder zum Ziehen von Anhängern oder kann selbst ein Anhänger sein. In anderen Worten ist eine Nutzfahrzeugradnabe im Vergleich zu einer normalen Radnabe deutlich stabiler ausgebildet. Die erfindungsgemäße Radnabe ist dazu ausgelegt, um eine Rotationsachse in Umfangsrichtung zu rotieren, wobei diese Rotationsachse insbesondere die Rotationsachse der Welle und/oder der Achse und/oder des Rades ist, welche mit der Nabe gelagert werden soll oder auf der die Nabe gelagert ist oder sein soll. Die Nabe weist dabei eine Verbindungsfläche auf, wobei die Verbindungsfläche dazu ausgelegt ist, mittel- und/oder unmittelbar mit einer Anlagefläche einer Bremsscheibe zu kontaktieren. Zusätzlich weist die Nabe auch eine Verbindungsöffnung auf, wobei diese Verbindungsöffnung dazu ausgelegt ist, zumindest ein Verbindungsmittel aufnehmen zu können. Ein Verbindungsmittel im Sinne der Erfindung kann beispielsweise eine Schraube, ein Bolzen oder eine Niete sein. Durch die Verbindungsöffnung und durch die Verbindungsfläche wird eine Art Spannsystem bereitgestellt, um eine Bremsscheibe an der erfindungsgemäßen Nabe festlegen zu können bzw. montieren zu können. Erfindungsgemäß ist die Verbindungsfläche verbindungsöffnungsfrei ausgebildet. Dies bedeutet, dass die Verbindungsöffnung sich nicht von einer Verbindungsfläche aus erstreckt und/oder zumindest teilweise nicht durch die Verbindungsfläche begrenzt ist. Durch dieses verbindungsöffnungsfreie Ausbilden der Verbindungsfläche kann erreicht werden, dass die Verbindungsfläche selber bzw. deren äußeren Abmaße besonders klein gestaltet werden können, sodass eine besonders kompakte Nabe resultiert. Darüber hinaus kann diese verbindungsöffnungsfreie Ausgestaltung der Verbindungsfläche auch noch dazu dienen, dass die Verbindungsfläche eine relativ homogene Flächenpressung - in einem Zustand bei dem die Bremsscheibe montiert ist - aufweist. Die erfindungsgemäße Nabe kann dabei auch die im weiteren aufgeführten Merkmale aufweisen, insbesondere auch die Merkmale der beschriebenen Nabe der Bremsscheibenanordnung, ohne dass dafür das Vorhandensein einer Bremsscheibe gegeben sein muss.

Zweckmäßigerweise ist die Verbindungsfläche, vorteilhafterweise alle Verbindungsflächen, in Richtung der Rotationsachse und/oder in Radialrichtung beabstandet zu der Fläche bzw. den Flächen, welche die Verbindungsöffnung umgibt/umgeben und/oder aufweist/aufweisen. Maßgeblich ist dabei jeweils die zu der Verbindungsfläche nächstliegende Fläche in Richtung der Rotationsachse, welche die Verbindungsöffnung umgibt und/oder aufweist. In anderen Worten kann die Verbindungsfläche in Richtung der Rotationsachse und/oder in Radialrichtung versetzt zu der/den nächstliegenden Fläche(n) sein, welche die Verbindungsöffnung(en) umgibt/umgeben und/oder aufweist/aufweisen. Hierdurch kann in besonders einfacher und platzsparender Weise ein Spannsystem realisiert werden, welches durch die Beabstandung große Klemmlängen erreichen kann und somit günstige Montagebedingungen, insbesondere bei einer dynamischen Belastung, bietet.

Vorteilhafterweise sind die Verbindungsflächen derart ausgebildet, dass die Normale dieser Verbindungsflächen im Wesentlichen parallel zur Rotationsachse sind. Hierdurch kann eine besonders bauraumsparende Nabe in Richtung der Rotationsachse erreicht werden. Unter im Wesentlichen parallel zur Rotationsachse ist zu verstehen, dass die Normale der Verbindungsfläche einen Winkel von maximal 5°, bevorzugt maximal 4°, besonders bevorzugt maximal 1,5° und besonders stark bevorzugt maximal 1° mit der Rotationsachse bildet.

Vorteilhafterweise ist die Nabe einstückig ausgebildet. Durch die einstückige Ausbildung der Nabe kann eine besonders bauraumsparende und mechanisch belastbare Nabe ermöglicht werden. Beispielsweise kann eine derartige einstückige Ausbildung durch das einstückige Gießen der Nabe erreicht werden. Darüber hinaus kann die Nabe auch als ein einstückiges Schmiedeteil ausgebildet sein. Der Vorteil von einstückigen Schmiedeteilen ist, dass diese besonders vorteilhafte mechanische Eigenschaften aufweisen.

Vorteilhafterweise weist die Nabe einen Kernbereich, einen Kragbereich und einen Bremsscheibenanschlussbereich auf, wobei der Kragbereich und der Bremsscheibenanschlussbereich sich radial in Richtung einer Radialrichtung vom Kernbereich erstrecken, wobei der Kragbereich eine Radanlagefläche und mindestens eine Verbindungsöffnung, bevorzugt alle Verbindungsöffnungen, aufweist, wobei der Bremsscheibenanschlussbereich zumindest eine Anlagefläche, bevorzugt alle Anlagenflächen, aufweist. Die Radialrichtung ist die sich radial von der Rotationsachse weg erstreckende Richtung. Durch die Aufteilung der Nabe in die verschiedenen Bereiche, insbesondere Kragbereich, Kernbereich und Bremsscheibenanschlussbereich, kann erreicht werden, dass diese Bereiche explizit funktionsgerecht ausgestaltet werden können. Darüber hinaus führt diese Art der Ausbildung auch noch dazu, dass unnötige Teile eingespart werden können, sodass eine besonders gewichts- und bauraumsparende Nabe resultiert. Der Kragbereich und der Bremsscheibenanschlussbereich können insbesondere diametral gegenüberliegende Bereiche der Radnabe entlang der Rotationsachse ausbilden. Der Bremsscheibenanschlussbereich kann beispielsweise durch kleine Rippenelemente ausgebildet sein, welche nicht unbedingt zusammenhängend ausgebildet sein müssen. In anderen Worten kann dies bedeuten, dass der Bremsscheibenanschlussbereich durch mehrere kleine Elemente gebildet ist, welche beispielsweise lediglich über den Kernbereich miteinander verbunden sind. Der Kernbereich der Nabe dient insbesondere dazu, eine mechanische Verbindung zwischen dem Kragbereich und dem Bremsscheibenanschlussbereich zu schaffen. Der Kernbereich bildet dabei bevorzugt zumindest die Bestandteile der Nabe aus, welche nächstliegend zur Rotationsachse sind. In anderen Worten kann dies bedeuten, dass insbesondere die Teile der Nabe, welche der Rotationsachse zugewandt sind, insbesondere ausschließlich, durch den Kernbereich ausgebildet sind. Der Kragbereich der Nabe weist insbesondere eine Radanlagefläche auf. Diese Radlageanlagefläche dient dazu, insbesondere unmittelbar oder mittelbar mit einem Rad in einem montierten Zustand zu kontaktieren. In anderen Worten kann die Radanlagefläche oder die Radanlagenflächen des Kragbereichs dazu dienen, eine mechanische Verbindung mit einem Rad zu ermöglichen. Zusätzlich weist der Kragbereich insbesondere zumindest eine Verbindungsöffnung, bevorzugt alle Verbindungsöffnungen, auf. Durch diese Ausbildung der Verbindungsöffnungen im Kragbereich kann vorteilhafterweise eine besonders lange Klemmlänge der Verbindungsmittel zur Anbindung der Bremsscheibe erreicht werden. Diese lange Klemmlänge hat dabei insbesondere im Hinblick auf dynamische Lasten starke Vorteile, denn hierdurch kann ein großer Durchmesser des Befestigungsmittels, wie er insbesondere bei Nutzfahrzeuganordnungen benötigt wird, verwendet werden, wobei gleichzeitig die Federsteifigkeit des Befestigungsmittels durch die lange Länge reduziert werden kann.

Um eine vorteilhafte Klemmlänge zu erreichen, ist der minimalste Abstand der Verbindungsöffnungen zu der Anlagefläche bzw. zu der nächst beabstandeten Anlagefläche zumindest 3 cm, bevorzugt zumindest 10 cm und besonders stark bevorzugt zumindest 15 cm in Richtung der Rotationsachse.

In einer vorteilhaften Ausführungsform bildet der Kernbereich einen Zwischenbereich aus, welcher in Richtung der Rotationsachse zwischen dem Kragbereich und dem Bremsscheibenanschlussbereich liegt, wobei der Zwischenbereich insbesondere rippenfrei ausgebildet ist. Unter rippenfrei kann verstanden werden, dass zumindest im Zwischenbereich keine verstärkenden Rippen vorgesehen sind. Beispielsweise kann der Zwischenbereich dabei glatt verlaufend ausgebildet sein. Unter glattverlaufend ist insbesondere zu verstehen, dass die innere und/oder die äußere Kontur des Nabenbereichs in einer Schnittebne, dessen Normale parallel zur Rotationsachse ist, kreisrund, viereckig oder elliptisch ausgestaltet ist. Durch das rippenfreie Ausbilden des Zwischenbereichs kann dieser besonders kerbwirkungsarm gestaltet werden, sodass dieser bei einem geringeren Materialbedarf dennoch starken Belastungen ausgesetzt werden kann. Der Bremsscheibenanschlussbereich oder der Kragbereich hingegen können jedoch Rippen bzw. Rippenelemente zur Verstärkung aufweisen. Der Zwischenbereich des Kernbereichs ist bevorzugt derart zwischen dem Kragbereich und dem Bremsscheibenanschlussbereich angeordnet, sodass dieser insbesondere ausschließlich die mechanische Verbindung zwischen dem Kragbereich und dem Bremsscheibenanschlussbereich schafft.

In einer bevorzugten Ausführungsform weist der Zwischenbereich im Vergleich zu dem Kragbereich und/oder im Vergleich zu dem Bremsscheibenanschlussbereich eine verjüngte Außengeometrie auf. Überraschenderweise hat die Anmelderin herausgefunden, dass der Zwischenbereich deutlich geringer in seiner Dimensionierung ausgestaltet sein kann als der Zwischenbereich oder der Kragbereich. Daher kann durch die verjüngte Außengeometrie Gewicht und Bauraum gespart werden. Eine im Vergleich zu dem Kragbereich und/oder zu dem Bremsscheibenanschlussbereich verjüngte Außengeometrie liegt insbesondere dann vor, wenn die Außengeometrie des Zwischenbereichs einen geringeren Abstand zu der Rotationsachse aufweist, als die nächstliegenden Teile des Kragbereichs und/oder des Bremsscheibenanschlussbereichs in Richtung der Rotationsachse.

Vorteilhafterweise weist der Kragbereich einen größeren maximalen Abstand von der Rotationsachse in Richtung der Radialrichtung auf als der Bremsscheibenanschlussbereich. Durch die geringe Abmessung des Bremsscheibenanschlussbereichs in Richtung der Radialrichtung resultiert eine bauraumsparende Nabe. Vorteilhafterweise liegt das Verhältnis der maximalen Erstreckung des Bremsscheibenanschlussabschnittes (bzw. der Abschnitte) in Richtung der Radialrichtung zu der maximalen Erstreckung des Kragbereichs in Richtung der Radialrichtung in einem Bereich von 0,4 bis 0,6. Hierdurch kann eine besonders bauraumsparende Nabe erreicht werden.

Vorteilhafterweise ist die Nabe, insbesondere im Zwischenbereich, in zumindest einer Schnittebene dessen Normale parallel zur Rotationsachse ist, derart ausgebildet, dass der Querschnitt eine kreisförmige Außenkontur um die Rotationsachse aufweist. Durch das Ausbilden einer kreisförmigen Außenkontur dieses Querschnitts kann eine besonders torsionsbelastbare Querschnittsform erreicht werden. Besonders bevorzugt ist es, wenn in diesem Querschnitt nicht nur die Außenkontur kreisförmig ausgebildet ist, sondern auch die Innenkontur, denn insbesondere ein dadurch resultierender Kreisringquerschnitt weist eine besonders hohe Torsionsbelastbarkeit auf.

Vorteilhafterweise weist die Nabe Rippen auf, welche bevorzugt in Richtung der Radialrichtung und/oder in Richtung der Rotationsachse verlaufen, wobei zumindest eine Verbindungsfläche einen Teil jeweils einer Rippe ausbildet, wobei diese Rippen sich bevorzugt lediglich in den Bremsscheibenanschlussbereich erstrecken und/oder den Bremsscheibenanschlussbereich ausbilden. Unter Rippen sind dabei insbesondere Vorsprünge zu verstehen, die sich in die Radialrichtung und/oder in Richtung der Rotationsachse erstrecken. Durch das Ausbilden von Rippen resultiert eine besonders leichte Nabe, denn im Vergleich zu einer vollständigen Ausbildung weisen Rippen einen besonders geringen Materialbedarf auf, sodass eine besonders leichte Nabe resultiert. Vorteilhafterweise sind die Rippen derart ausgebildet, dass diese jeweils zumindest eine Verbindungsfläche ausbilden bzw. aufweisen. Durch diese Art der Ausgestaltung kann in besonders kompakter Weise die Verbindungsfläche ausgebildet werden. Beispielsweise kann der Bremsscheibenanschlussbereich lediglich durch einzelne in Umfangsrichtung um den Kernbereich ausgebildete Rippenelemente ausgebildet sein, welche jedoch zweckmäßigerweise nicht zusammenhängend zueinander sind. Vorteilhafterweise erstreckt sich dabei jeweils zwischen diesen Rippen ein Befestigungsmittel, wobei dieses Befestigungsmittel im Wesentlichen parallel zur Rotationsachse orientiert ist. Durch diese Art der Ausbildung des Bremsscheibenanschlussbereichs kann daher ein besonders kompakter Bremsscheibenanschlussbereich bzw. eine besonders kompakte Nabe erreicht werden, denn die Befestigungsmittel können durch die rippenartige Ausgestaltung der einzelnen "Subbremsscheibenanschlussbereiche" besonders nahe an der Rotationsachse angeordnet werden.

Bevorzugt weist die Nabe, insbesondere im Kragbereich, eine Radbolzenaufnahme, bevorzugt eine Vielzahl von Radbolzenaufnahmen, auf. Durch das Vorsehen der Radbolzenaufnahmen kann in besonders einfacher Weise eine Montage eines Rades an der Nabe erreicht werden. Vorteilhafterweise ist diese Radbolzenaufnahme und/oder eine mögliche vorhandene Radanlagenfläche im Kragbereich weiter von der Rotationsachse beabstandet angeordnet als die Verbindungsöffnung, bevorzugt aller Verbindungsöffnungen, im Kragbereich. Durch diese weiter radial außen angeordneten Radbolzenaufnahmen und/oder Radanlagenfläche bzw. Radanlagenflächen resultiert eine besonders bauraumsparende Nabe. Vorteilhafterweise durchdringt zumindest eine Verbindungsöffnung, bevorzugt alle Verbindungsöffnungen, die Nabe, insbesondere den Kragbereich, vollständig.

Durch dieses vollständige Durchdringen der Verbindungsöffnung kann das - in einem montierten Zustand vorhandene - Verbindungsmittel besser erreicht werden, sodass die Montage der Bremsscheibe leichter erfolgen kann. Besonders bevorzugt ist es, wenn die Verbindungsöffnungen die Nabe, insbesondere den Kragbereich, vollständig durchdringen und gleichzeitig radial weiter innen angeordnet sind als die Radanlagenfläche bzw. die Radanlagenflächen sowie die Radbolzenaufnahmen. Hierdurch wird die Zugänglichkeit der Verbindungsöffnungen auch dann gewährleistet, wenn ein Rad an der Radnabe befestigt ist, sodass beispielsweise auch im laufenden Betrieb die Bremsscheibe demontiert erfolgen kann.

Vorteilhafterweise weist die Nabe Luftkanäle auf, welche sich insbesondere in Richtung der Rotationsachse erstrecken. Durch das Vorsehen dieser Luftkanäle kann die Kühlwirkung einer hinter der Nabe liegenden Bremsscheibe gesteigert werden und zusätzlich resultiert hierdurch auch noch eine Gewichtsreduktion. Vorteilhafterweise sind diese Luftkanäle derart angeordnet, dass diese alternierend mit den Rippen der Nabe angeordnet sind. In anderen Worten kann dies bedeuten, dass jeweils zwischen zwei Rippen in Umfangsrichtung gesehen ein solcher Luftkanal vorgesehen ist. Der Luftkanal kann einen Teil der Nabe bevorzugt in Richtung der Rotationsachse vollständig durchdringen, sodass ein von außen eintretender Kühlstrom durch die Luftkanäle bis zur Bremsscheibe gelangen kann.

Zweckmäßigerweise weist die Nabe zumindest eine Lageranlagenfläche auf, bevorzugt zumindest zwei Lageranlagenflächen. Durch die Möglichkeit zumindest ein oder zwei Radlager an der Nabe anzuordnen, resultiert eine besonders kompakte Radnabe. Die Lageranlageflächen sind insbesondere diejenigen Flächen, welche das Radlager und/oder das Lager mittel- und/oder unmittelbar in einem montierten Zustand kontaktiert(en). Besonders bevorzugt bilden die Lageranlagenfläche(n) eine radiale innere Begrenzung des Kernbereichs aus.

Vorteilhafterweise weist die Nabe zumindest einen Zentriervorsprung auf, wobei der Zentriervorsprung eine Verbindungsfläche in Richtung der Radialrichtung begrenzt. Der Zentriervorsprung ist dabei ein Vorsprung, welcher beispielsweise dazu ausgelegt sein kann, in einem komplementär ausgebildeten Rücksprung in einer Bremsscheibe eingreifen zu können. Durch diese komplementäre Ausbildung des Zentriervorsprungs mit dem Bremsscheibenrücksprung kann insbesondere die Montage der Bremsscheibe erleichtert werden. Durch das Ausbilden des Zentriervorsprungs derart, dass dieser eine Verbindungsfläche in Radialrichtung begrenzt, kann zusätzlich eine Art Verzahnung mit einer Bremsscheibe erreicht werden. Durch das radial weiter außen liegende Anordnen kann daher insbesondere auch eine Art "Notfallverzahnung" bereitgestellt werden, durch die auch hohe Drehmomente sicher übertragen werden können. Besonders bevorzugt ist es, wenn jede Verbindungsfläche in Richtung der Radialrichtung, insbesondere nach außen, durch einen solchen Zentriervorsprung begrenzt ist. Hierdurch kann eine besonders belastbare Notfallbremsvorrichtung bzw. Notfalldrehmomentübertragung realisiert werden. Diesbezüglich ist jedoch darauf hinzuweisen, dass die Vorsprünge bzw. Zentriervorsprünge lediglich als Notfalldrehmomentübertragung dienen sollen, sodass insbesondere in einem montierten Zustand ein gewisses Spiel in Umfangsrichtung zu den komplementär ausgebildeten Rücksprüngen bzw. Formschlussübertragungsmitteln der Bremsscheibe gegeben sein sollen.

Vorteilhafterweise weist die Nabe eine Vielzahl von Verbindungsflächen auf, wobei bevorzugt jede der Verbindungsflächen in Richtung der radialen Richtung durch einen Zentriervorsprung begrenzt ist. Durch diese Vielzahl der Verbindungsflächen, welche insbesondere durch jeweils einen Zentriervorsprung in radialer Richtung, insbesondere außen, durch einen Zentriervorsprung begrenzt sind, resultiert eine besonders sichere Drehmomentübertragung auch bei hohen Drehmomenten und/oder stark dynamischen Drehmomenten.

Erfindungsgemäß umfasst eine Bremsscheibenanordnung eine Bremsscheibe, eine Nabe, insbesondere eine vorhergehend beschriebene Nabe, und zumindest ein Verbindungsmittel, wobei die Bremsscheibenanordnung dazu ausgelegt ist, um eine Rotationsachse in Umfangsrichtung zu rotieren, wobei die Bremsscheibe eine Anlagefläche und eine Montagefläche aufweist, wobei die Nabe eine Verbindungsfläche und eine Verbindungsöffnung aufweist, wobei eine Montageöffnung sich von der Montagefläche aus erstreckt, wobei die Anlagefläche dazu ausgelegt ist, mittel- und/oder unmittelbar mit der Verbindungsfläche der Nabe zu kontaktieren, wobei das Verbindungsmittel dazu ausgelegt ist, sich zumindest teilweise in der Montageöffnung und der Verbindungsöffnung zu erstrecken, wobei die Montagefläche nabenkontaktfrei ist. Die erfindungsgemäße Bremsscheibenanordnung dient dabei dazu, eine Welle, eine Achse, und/oder ein Rad zu bremsen. Dieses Bremsen erfolgt dabei insbesondere derart, dass durch einen reibenden Kontakt von Bremsbelägen mit den Reibflächen der Bremsscheibe ein dissipatives Bremsmoment entsteht, welches von der Bremsscheibe auf die Nabe übertragen wird, und von dort mittel- und/oder unmittelbar auf die Räder, die Welle oder die zu bremsende Achse. Diese zu bremsende Rotationsbewegung der Welle und/oder der Achse erfolgt dabei insbesondere in Umfangsrichtung um die Rotationsachse, um welche die Bremsscheibenanordnung rotieren kann. In anderen Worten kann die Rotationsachse daher diejenige Achse sein, um welche die Welle, die Achse und/oder das Rad, welches mittels der Bremsscheibenanordnung gebremst werden soll, rotieren kann. Die Bremsscheibe der erfindungsgemäßen Bremsscheibenanordnung verfügt über zumindest eine Anlagefläche und eine Montagefläche. Die Anlagefläche ist insbesondere dazu ausgelegt, mittelbar und/oder unmittelbar mit der Verbindungsfläche der Nabe zu kontaktieren. Vorteilhafterweise sind die mindestens eine Anlagefläche und die eine Verbindungsfläche dazu ausgelegt, eine Art Spannsystem zwischen der Nabe und der Bremsscheibe auszubilden. Die Anlagefläche ist insbesondere derart an der Bremsscheibe angeordnet, sodass diese auf der, insbesondere distalen, Seite der Bremsscheibe, insbesondere in Richtung der Rotationsachse gesehen, angeordnet ist, welche der Nabe, insbesondere deren Schwerpunkt, zugewandt ist und/oder auf der Seite der Bremsscheibe angeordnet ist, insbesondere in Richtung der Rotationsachse gesehen, auf welcher sich auch die Anlagefläche befindet. Die Nabe der Bremsscheibenanordnung verfügt über zumindest eine Verbindungsfläche, welche wie bereits ausgeführt dazu ausgelegt ist, mittel- und/oder unmittelbar mit der Anlagefläche zu kontaktieren. Vorteilhafterweise weist die Bremsscheibennabenanordnung nicht nur eine Anlagenfläche und eine Verbindungsfläche auf, sondern eine Vielzahl von Verbindungs- und Anlageflächen Paarungen. Die Verbindungsöffnung der Nabe dient dazu, ein Verbindungsmittel der Bremsscheibenanordnung aufzunehmen, wobei das Verbindungsmittel sich zumindest teilweise sowohl in der Verbindungsöffnung als auch in der Montageöffnung erstreckt. Beispielsweise kann das Verbindungsmittel eine Schraube, insbesondere eine Passschraube, ein Bolzen oder eine Niete sein. Die Montageöffnung, in welcher sich das Verbindungsmittel zumindest teilweise erstreckt, ist dabei derart ausgebildet, dass diese sich von der zu mindestens einen Montagefläche der Bremsscheibe aus erstreckt. In anderen Worten kann dies bedeuten, dass die Montageöffnung in eine Montagefläche eingebracht sein kann. Besonders bevorzugt ist die Montagefläche dabei derart gestaltet, dass diese die Montageöffnung vollständig umschließt. Vorteilhafterweise weist die Bremsscheibe eine Vielzahl von Montageflächen auf, denn hierdurch kann eine besonders sichere Festlegung der Nabe an der Bremsscheibe erfolgen. Zumindest eine, bevorzugt der überwiegende Teil und besonders stark bevorzugt sämtliche Montageflächen sind nabenkontaktfrei ausgestaltet. Unter nabenkontaktfrei ist dabei in diesem Zusammenhang zu verstehen, dass in einem montierten Zustand die Montagefläche die Nabe nicht mittelbar und/oder unmittelbar kontaktiert, insbesondere ist zwischen der Montagefläche und der Nabe ein Freibereich, vorteilhafterweise in Richtung der Rotationsachse und/oder in der Erstreckungsrichtung des Verbindungsmittels gesehen, vorgesehen, um ein solches Kontaktieren zu verhindern. Durch die erfindungsgemäße Ausgestaltung der Bremsscheibenanordnung kann eine besonders bauraumsparende und leichte Bremsscheibenanordnung erreicht werden.

Vorteilhafterweise weist die Bremsscheibe in Richtung der Rotationsachse und/oder in eine Radialrichtung hervorstehende Vorsprünge auf, wobei zumindest eine Montagefläche einen Teil eines Vorsprungs ausbildet, wobei die Montagefläche insbesondere eine berandende Stirnfläche für den Vorsprung in Richtung der Rotationsachse ausbildet. Die Stirnfläche der Vorsprünge ist insbesondere die die Vorsprünge in Richtung der Nabe berandende Stirnfläche der Vorsprünge. Durch das Vorsehen von Vorsprüngen, welche teilweise von der Montagefläche ausgebildet sind, kann eine besonders sichere Montage des Verbindungsmittels erfolgen und/oder eine besonders sichere Krafteinleitung von dem Verbindungsmittel in die Bremsscheibe erreicht werden. Vorteilhafterweise springen die Vorsprünge dabei in Radialrichtung und/oder in Richtung der Rotationsachse in Richtung der Nabe von der Bremsscheibe aus vor. Hierdurch kann unter anderem eine besonders kompakte Bremsscheibe erreicht werden.

In einer vorteilhaften Ausführungsform sind die Vorsprünge mit einer komplementär ausgebildeten Verzahnung der Nabe in Eingriff bringbar. Diese Verzahnungen der Nabe können polygonförmige und/oder quaderförmige Querschnitte, insbesondere senkrecht zur Zahnerstreckungsrichtung, aufweisen. Vorteilhafterweise springen die Zähne in Radialrichtung und/oder in Richtung der Rotationsachse hervor (Zahnerstreckungsrichtung). Hierdurch kann eine besonders einfache Herstellung der einzelnen Zähne erreicht werden. Alternativ oder zusätzlich bevorzugt kann die Verzahnung auch durch Zähne mit gerundetem Querschnitt ausgebildet sein, denn hierdurch kann die auftretende Kerbwirkung reduziert werden, sodass eine besonders mechanisch belastbare Verzahnung resultiert. Durch das Ineingriffbringen der Vorsprünge mit der komplementär ausgebildeten Verzahnung der Nabe kann eine besonders sichere Drehmomentübertragung, insbesondere im Fall einer Notfallbremsung, erreicht werden.

Vorteilhafterweise sind die Bremsscheibe und die Nabe über eine Polygonverbindung miteinander drehmomenttechnisch verbunden oder verbindbar. Hierdurch kann eine besonders sichere Drehmomentübertragung, insbesondere auch bei stark wechselnden Drehmomenten, sicher übertragen werden. Vorteilhafterweise ist die Polygonverbindung dabei derart ausgestaltet, dass die hierfür auf der Bremsscheibe und der Nabe benötigten komplementär ausgestalteten Konturen, insbesondere in Richtung der Rotationsachse betrachtet, ein Polygon, ein Viereck, ein Gleichdick, eine Blumenform und/oder eine Kleeblattform aufweisen, denn die Anmelderin hat herausgefunden, dass diese Art der Ausgestaltung der Konturen der Polygonverbindung besonders einfach, insbesondere mittels eines Urform-Verfahrens, hergestellt werden können und/oder ein besonders hohes Maß an Sicherheit für eine dynamische Drehmomentübertragung bieten.

In einer vorteilhaften Weiterbildung weisen die Vorsprünge der Bremsscheibe zu der Verzahnung der Nabe und/oder die Polygonverbindung zwischen Bremsscheibe und Nabe ein Spiel in Umfangsrichtung auf, insbesondere zwischen 0.1 mm und 2 mm. Hierdurch kann die Montage der Bremsscheibenanordnung vereinfacht werden, denn durch das Spiel in Umfangsrichtung lässt sich die Bremsscheibe einfach an die Nabe fügen, sodass wertvolle Montagezeit gespart werden kann.

Vorteilhafterweise weist die Nabe Rippen auf, welche bevorzugt in Richtung der Radialrichtung und/oder in Richtung der Rotationsachse verlaufen, wobei zumindest eine Verbindungsfläche einen Teil einer Rippe ausbildet. Bevorzugt ist zumindest eine Rippe, insbesondere jedoch der überwiegende Teil und besonders stark bevorzugt alle Rippen, derart ausgestaltet, dass jeweils eine Verbindungsfläche eine berandende Deckfläche bzw. Stirnfläche jeweils einer Rippe in Richtung der Rotationsachse ausbildet. In anderen Worten kann dies bedeuten, dass jede Rippe, insbesondere an dessen einem distalen Ende, eine Verbindungsfläche aufweist, die mittel- und/oder unmittelbar mit der Anlagefläche der Bremsscheibe kontaktiert. Besonders bevorzugt sind sämtliche Verbindungsflächen als Deckflächen für die Rippen ausgebildet. Durch diese rippenartige Ausgestaltung der Nabe resultiert eine besonders mechanisch belastbare und leichte Bremsscheibenanordnung.

Vorteilhafterweise weist die Nabe Vorsprünge auf, welche sich in komplementär ausgebildete Rücksprünge, insbesondere Taschen, der Bremsscheibe erstrecken. Hierdurch kann eine, insbesondere für Notfälle, formschlüssige Drehmomentübertragung zwischen Nabe und Bremsscheibe erreicht werden. Vorteilhafterweise ist zwischen den Verzahnungselementen (Vorsprünge und Rücksprünge) ein Spiel vorgesehen, insbesondere im Bereich von 0,1 mm bis 2 mm, in Umfangsrichtung und/oder in der Radialrichtung. Hierdurch kann die Montage der Bremsscheibe vereinfacht werden. Zusätzlich können die Vorsprünge der Bremsscheibe auch als Zentriervorsprünge dienen und/oder ausgebildet sein, um die Montage der Bremsscheibe zu vereinfachen. Besonders bevorzugt ist es, um eine hohe bzw. sichere Drehmomentübertragung zu erreichen, wenn die Vorsprünge der Nabe und die komplementären Rücksprünge der Bremsscheibe in Richtung der Radialrichtung weiter von der Rotationsachse beabstandet sind als der Abstand der Montagefläche(n) und/oder der Verbindungsfläche(n), insbesondere der mittlere Abstand der Montageflächen und/oder der Verbindungsflächen. Besonders zweckmäßig ist es, wenn die Vorsprünge der Bremsscheibe sich von einer Rippe aus erstrecken und/oder jeweils ein distales Ende einer Rippe in Richtung der Rotationsachse und/oder in Richtung der Radialrichtung ausbilden. Hierdurch kann sowohl eine besonders kompakte als auch eine besonders belastbare Bremsscheibenanordnung erreicht werden. Vorteilhafterweise weist die Bremsscheibenanordnung zumindest 7 und bevorzugt zumindest 10 Vorsprung-Rücksprungpärchen auf, um auch bei schlagartiger Belastung eine sichere Drehmomentübertragung sicherstellen zu können.

Bevorzugt weist die Bremsscheibe eine Vielzahl von Anlageflächen und eine Vielzahl von Montageflächen auf, wobei die Anlageflächen und die Montageflächen in Umfangsrichtung alternierend angeordnet sind. Alternierend angeordnet kann in diesem Zusammenhang bedeuten, dass die Anlageflächen und die Montageflächen, insbesondere in Umfangsrichtung gesehen, abwechselnd angeordnet sind. In anderen Worten kann dies bedeuten, dass in den "Lücken" zwischen den Anlageflächen die Montageflächen angeordnet sind. Durch die alternierende Anordnung kann eine besonders mechanisch belastbare Bremsscheibe erreicht werden, denn durch die alternierende Anordnung resultiert eine besonders vorteilhafte Spannungsverteilung in der Bremsscheibe.

Zweckmäßigerweise sind die Anlagenflächen und die Montageflächen in Radialrichtung (bzw. in eine radiale Richtung) derart angeordnet, dass zumindest ein Teil dieser Flächen den gleichen Abstand zu der Rotationsachse aufweisen. In anderen Worten kann dies bedeuten, dass die Anlagenflächen und die Montageflächen derart ausgestaltet sind, dass in Richtung der Rotationsachse betrachtet zumindest ein Kreis existiert, dessen Projektion sowohl sämtliche Montageflächen als auch sämtliche Anlageflächen schneidet. Durch diese Art der Anordnung der Anlageflächen und der Montageflächen kann eine besonders bauraumsparende Bremsscheibenanordnung erreicht werden.

Bevorzugt ist der Abstand einer, vorteilhafterweise aller, Montageöffnungen von der Rotationsachse größer als der mittlere Abstand der Anlageflächen von der Rotationsachse. Hierdurch kann eine besonders einfache Montage erreicht werden, denn durch das weiter außen Platzieren der Montageöffnung wird deren Zugänglichkeit erhöht, sodass insbesondere das Verbindungsmittel leichter in die Montageöffnung eingeführt werden kann. Der mittlere Abstand der Anlagenflächen ist dabei insbesondere der gemittelte absolute Abstand der Flächenelemente der Anlageflächen. In anderen Worten kann dies bedeuten, dass der mittlere Abstand, der gemittelte absolute Abstand aller Anlagenflächen zur Rotationsachse ist. Der für die Bestimmung des Abstands der Montageöffnungen maßgebliche Abstand ist insbesondere der maximale Abstand der Montageöffnungen und/oder der gemittelte Abstand aller Montageöffnungen.

Vorteilhafterweise liegt das Verhältnis des mittleren Abstands der Anlagefläche von der Rotationsachse zu dem mittleren Abstand der Montageöffnung von der Rotationsachse in einem Bereich von 0,6-1,5, bevorzugt in einem Bereich von 0,8-1,2, und besonders stark bevorzugt in einem Bereich von 0,9-1,1. Bei einem Verhältnis von 0,6-1,5 resultiert eine besonders bauraumsparende Bremsscheibenanordnung. Bei einem Verhältnis des mittleren Abstands der Anlageflächen von der Rotationsachse zu dem mittleren Abstand der Montageöffnung von der Rotationsachse in einem Bereich von 0,8-1,2 hat die Anmelderin überraschend herausgefunden, dass hierdurch eine besonders einfach zu fertigende Bremsscheibe, und somit eine besonders einfach zu fertigende Bremsscheibenanordnung resultiert. Bei einem Verhältnis im Bereich von 0,9-1,1 kann eine besonders sichere Drehmomentübertragung zwischen der Nabe und der Bremsscheibe sichergestellt werden.

Vorteilhafterweise weist zumindest eine Anlagefläche, bevorzugt der überwiegende Teil der Anlageflächen, und besonders stark bevorzugt alle Anlagenflächen, und/oder zumindest eine Verbindungsfläche, bevorzugt der überwiegende Teil der Verbindungsflächen, und besonders stark bevorzugt alle Verbindungsflächen eine, insbesondere gemittelte, Normale auf, welche im Wesentlichen parallel zur Erstreckung des Verbindungsmittels und/oder zu der Rotationsachse ist. Unter "im Wesentlichen parallel" ist dabei generell zu verstehen, dass die beiden maßgeblichen Richtungen einen (kleineren) Winkel zueinander aufweisen dürfen, welcher maximal 15° beträgt, bevorzugt maximal 7°, und besonders bevorzugt maximal 1°. Durch diese Art der Ausgestaltung der Anlagenflächen und der Verbindungsflächen in Relation zu der Erstreckung des Verbindungsmittels und/oder zu der Ausrichtung der Rotationsachse kann eine besonders einfache Herstellung der Anlageflächen und/oder der Verbindungsflächen erreicht werden. Alternativ oder zusätzlich bevorzugt ist es, wenn die Verbindungsflächen und die Anlagenflächen zumindest parallel zueinander ausgestaltet sind, sodass eine besonders einfache Festlegung erfolgen kann.

Vorteilhafterweise weisen die Anlagenflächen und/oder die Verbindungsflächen eine Rauheit (Rz) von maximal 40 µm, bevorzugt von maximal 30 µm, und besonders stark bevorzugt von maximal 12 µm auf. Hierdurch können die im Betrieb kaum zu vermeidenden Setzungserscheinungen reduziert werden.

Vorteilhafterweise durchdringt zumindest eine Verbindungsöffnung, bevorzugt alle Verbindungsöffnungen, die Nabe vollständig und/oder wobei zumindest eine Montageöffnung, bevorzugt alle Montageöffnungen, die Bremsscheibe vollständig durchdringen. Durch das vollständige Durchdringen der Nabe und/oder der Bremsscheibe resultiert eine besonders einfache Fertigung der Nabe und/oder der Bremsscheibe. Alternativ oder zusätzlich bevorzugt können die Montageöffnung(en) und/oder die Verbindungsöffnung(en) auch nicht durchgängig, insbesondere als Sackloch, ausgeführt sein. Hierdurch kann die Montage, insbesondere der Bremsscheibe, dadurch vereinfacht werden, dass durch die Sacklöcher eindeutig die Orientierung der Bremsscheibe in Relation zur Nabe erkannt werden kann, sodass insbesondere Montagefehler vermieden werden können.

Zweckmäßigerweise weist die Nabe zumindest eine Lageranlagenfläche auf, bevorzugt zumindest zwei Lageranlagenflächen, für ein Radlager. Durch die Möglichkeit, zumindest ein oder zwei Radlager an der Nabe anzuordnen, kann die Nabe der Bremsscheibenanordnung auch als Radnabe dienen, sodass eine besonders kompakte Radlager- und Bremsscheibenanordnung erreicht wird. Die Lageranlageflächen sind insbesondere diejenigen Flächen, mittels welchen das Radlager mittel- und/oder unmittelbar in einem montierten Zustand kontaktiert. Diesbezüglich ist darauf hinzuweisen, dass die Lageranlagenflächen nicht zwangsweise eben ausgestaltet sein müssen, vielmehr ist unter den Lageranlagenflächen zu verstehen, dass jeweils eine Lageranlagenfläche dazu dient, ein Radlager abzustützen und/oder das an dieser Fläche ein Radlager anliegen kann.

Bevorzugt weist die Nabe eine Radbolzenaufnahme auf. Durch diese Ausgestaltung der Nabe als Radnabe kann ein besonders kompaktes Achsaggregat bzw. ein kompakter Achskopf erreicht werden, sodass wertvoller Bauraum gespart werden kann. Die Radbolzenaufnahme kann dabei beispielsweise durch Öffnungen gebildet sein, durch welche sich Radbolzen erstrecken können. Vorteilhafterweise weist die Nabe auch noch einen Zentrierkranz und/oder mehrere Zentrierkranzsegmente auf, mittels welchen eine Felge eines Rades an der Nabe zentriert werden kann.

Vorteilhafterweise ist die Bremsscheibe in Richtung der Radialrichtung, zumindest in einem nicht montierten Zustand, insbesondere von der Radnabe weg gebogen und/oder V-förmig und/oder geschirmt ausgebildet. Durch diese Ausbildung der Bremsscheibe wird dem durch das Verbindungsmittel auf die Bremsscheibe wirkenden Moment entgegengewirkt, sodass in einem montierten Zustand die Bremsscheibe insbesondere nicht mehr gebogen und/oder V-förmig und/oder geschirmt ausgebildet ist. Unter gebogen ausgebildet kann dabei in diesem Zusammenhang insbesondere verstanden werden, dass die Erstreckung der bremsscheibe in Radialrichtung bogenförmig verläuft. Eine bogenförmige Ausgestaltung der Bremsscheibe ist dem Fachmann auch beispielsweise bei einer temperaturbedingten Aufschirmung der Bremsscheibe bekannt.

Vorteilhafterweise liegt das Verhältnis der maximalen Erstreckung der Bremsscheibe in Richtung der Rotationsachse zu einer maximalen Erstreckung der Nabe in Richtung der Rotationsachse in einem Verhältnis im Bereich von 0,07-0,5, bevorzugt im Bereich von 0,1-0,3, und besonders bevorzugt im Bereich 0,15-0,25. Bei einem Verhältnis im Bereich von 0,07-0,5 hat die Anmelderin herausgefunden, dass eine besonders einfach zu montierende Bremsscheibenanordnung resultiert. Bei einem Verhältnis von 0,1-0,3 resultiert eine besonders bauraumsparende, und bei einem Verhältnis von 0,15-0,25 eine besonders leichte Bremsscheibenanordnung.

Alternativ oder zusätzlich bevorzugt liegt das Verhältnis der maximalen Erstreckung der Bremsscheibe in Richtung der Rotationsachse zu einer maximalen Erstreckung einer Kontaktfläche der Nabe zu einem distalen Ende der Nabe, in einem Bereich von 0,1-0,5, bevorzugt in einem Bereich von 0,15-0,4, und besonders stark bevorzugt in einem Bereich von 0,2-0,3. Die Kontaktfläche der Nabe ist dabei insbesondere diejenige Fläche, an welcher das Verbindungsmittel, insbesondere dessen Schrauben- oder Nietenkopf, die Nabe kontaktiert. Die maximale Erstreckung dieser Kontaktfläche zum distalen Ende der Nabe ist dabei die größere der beiden Erstreckungen in Richtung der Rotationsachse der Nabe zu dessen distalen Enden in Richtung der Rotationsachse. Bei einem Verhältnis von 0,1-0,5 resultiert eine besonders einfach zu montierende Bremsscheibenanordnung. Bei einem Verhältnis von 0,15-0,4 eine besonders bauraumsparende und bei einem Verhältnis von 0,2-0,3 eine besonders leichte Bremsscheibenanordnung.

Vorteilhafterweise liegt das Verhältnis der maximalen Erstreckung des Verbindungsmittels zu der maximalen Erstreckung der Nabe in Richtung der Rotationsachse in einem Bereich von 0,3-1,1, bevorzugt in einem Bereich von 0,5-0,95, und besonders stark bevorzugt in einem Bereich von 0,7-0,85. Die maximale Erstreckung des Verbindungsmittels ist dabei insbesondere die maximale Länge des Verbindungsmittels. Zweckmäßigerweise kann die maximale Länge des Verbindungsmittels dabei diejenige Länge des Verbindungsmittels in Richtung der Rotationsachse in einem montierten Zustand sein. Bei einem Verhältnis von 0,3-1,1 resultiert eine besonders sichere Festlegung der Nabe, denn durch die besonders große Länge des Verbindungsmittels können besonders gut dynamische Lasten aufgenommen werden, sodass eine sichere Festlegung der Bremsscheibe resultiert. Bei einem Verhältnis von 0,5-0,95 resultiert eine besonders bauraumsparende Bremsscheibenanordnung. Bei einem Verhältnis im Bereich von 0,7-0,85 resultiert eine besonders sichere Festlegung auch gegenüber statischen Lasten.

Vorteilhafterweise ist die Bremsscheibe eine belüftete, insbesondere eine querbelüftete, Bremsscheibe. Durch das Ausgestalten der Bremsscheibe als eine belüftete, insbesondere eine querbelüftete, Bremsscheibe, resultiert eine Bremsscheibe, die auch hohen Anforderungen gerecht werden kann und zusätzlich kann hierdurch auch noch Gewicht eingespart werden.

Vorteilhafterweise weist die Nabe Luftkanäle auf, welche sich insbesondere in Richtung der Rotationsachse erstrecken. Durch das Vorsehen dieser Luftkanäle kann die Kühlwirkung der Bremsscheibe gesteigert werden und zusätzlich resultiert hierdurch auch noch eine Reduktion des Gewichts der Bremsscheibenanordnung. Vorteilhafterweise sind diese Luftkanäle derart angeordnet, dass diese alternierend mit den Rippen der Nabe angeordnet sind. In anderen Worten kann dies bedeuten, dass jeweils zwischen zwei Rippen in Umfangsrichtung gesehen ein solcher Luftkanal vorgesehen ist. Der Luftkanal kann einen Teil der Nabe bevorzugt in Richtung der Rotationsachse vollständig durchdringen, sodass ein von außen eintretender Kühlstrom durch die Luftkanäle bis zur Bremsscheibe gelangen kann.

Ein weiterer Aspekt betrifft eine Bremsscheibe für eine Bremsscheibenanordnung wie sie vorgehend beschrieben wurde.

Ein weiterer Aspekt betrifft eine Nabe für eine Bremsscheibenanordnung wie sie vorgehend beschrieben wurde.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Figur 1:: einen Schnitt durch eine Bremsscheibenanordnung;
- Figur 2:: einen weiteren Schnitt durch eine Bremsscheibenanordnung;
- Figur 3:: eine Außenansicht einer Bremsscheibenanordnung;
- Figur 4:: eine Außenansicht einer Nabe; und
- Figur 5:: einen Schnitt durch eine Nabe.

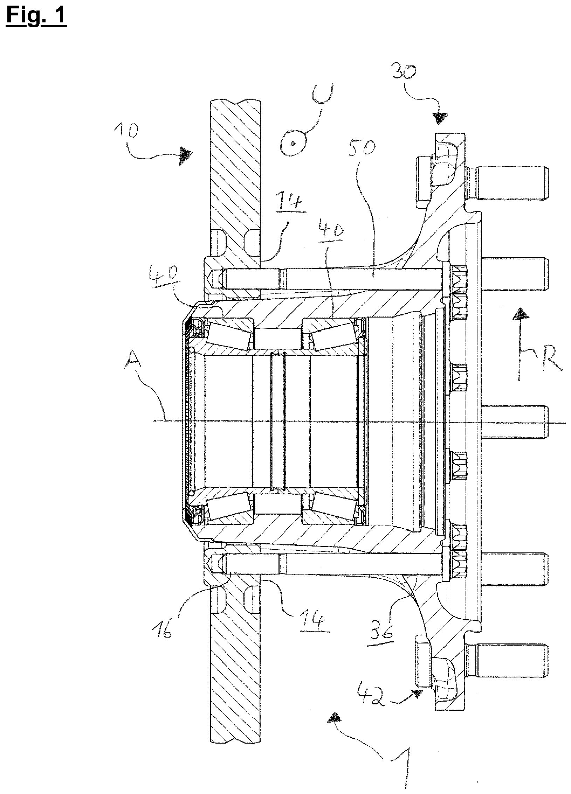

In **Figur 1** ist eine Schnittansicht durch eine Bremsscheibenanordnung 1 gezeigt. Die Bremsscheibenanordnung 1 umfasst dabei eine Bremsscheibe 10, und eine Nabe 30, sowie eine Vielzahl von Verbindungsmitteln 50. Die Bremsscheibenanordnung 1 ist dabei dazu ausgelegt, um die Rotationsachse A in positive oder negative Umfangsrichtung U zu rotieren. Die Bremsscheibe 10 weist dabei eine Vielzahl von Anlageflächen 12 (in Figur 1 nicht dargestellt) und eine Vielzahl von Montageflächen 14 auf. In die Montageflächen 14 ist in der dargestellten Ausführungsform jeweils eine Montageöffnung 16 eingebracht, in welcher sich zumindest teilweise ein Verbindungsmittel 50 erstreckt. Die Verbindungsmittel 50, welche zumindest im Wesentlichen parallel zur Rotationsachse A sind, erstrecken sich auch noch durch die Verbindungsöffnungen 36 der Nabe 30 und verbindet so die Bremsscheibe 10 mit der Nabe 30. Die Nabe 30 umfasst - in Radialrichtung R gesehen - in dessen äußeren Bereich über eine Vielzahl von Radbolzenaufnahmen 42, welche jeweils einen Radbolzen aufnehmen. Zusätzlich verfügt die Nabe 30 auch noch über zwei Lageranlageflächen 40, an welchem jeweils ein Kegelrollenlager anliegt.

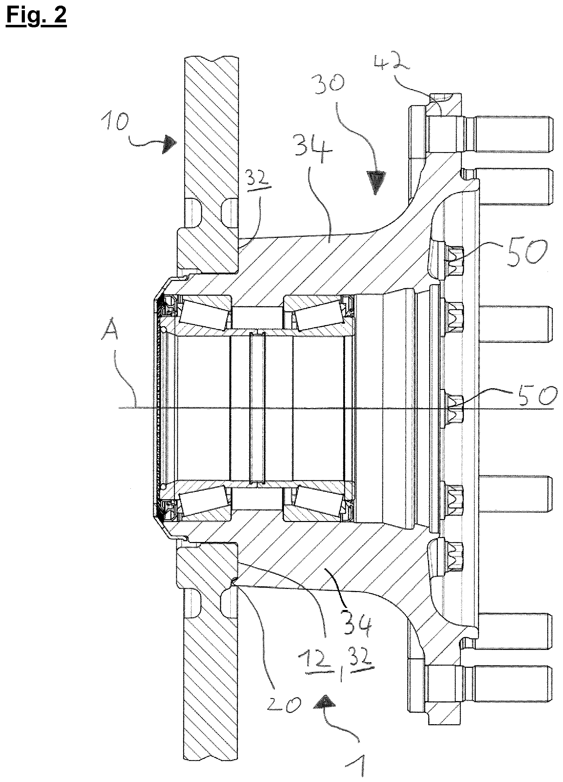

In **Figur 2** ist eine weitere Ausführungsform einer Bremsscheibenanordnung 1 gezeigt, wobei der in der Figur 2 gezeigte Schnitt zu der in der Figur 1 gezeigten Ausführungsform passen kann. Hierbei sind jedoch die Schnittebenen in der Figur 1 und der Figur 2 relativ zueinander um einen gewissen Winkel in Umfangsrichtung U zueinander verdreht. Die Nabe 30 der in der Figur 2 dargestellten Bremsscheibenanordnung 1 weist dabei eine Vielzahl von Rippen 34 auf, wobei jeweils eine Verbindungsfläche 32, eine berandende Deckfläche der Rippe 34 in Richtung der Rotationsachse A ausbildet. Die Verbindungsflächen 32 kontaktieren dabei unmittelbar die gegenüberliegende Anlagefläche 12 der Bremsscheibe 10. Um eine besonders einfache Montage der Bremsscheibe 10 an der Radnabe 30 zu erreichen, weist die Radnabe 30 einen Zentriervorsprung 20 auf, welcher in eine komplementär ausgebildete Zentrieraussparung der Bremsscheibe 10 eingreift.

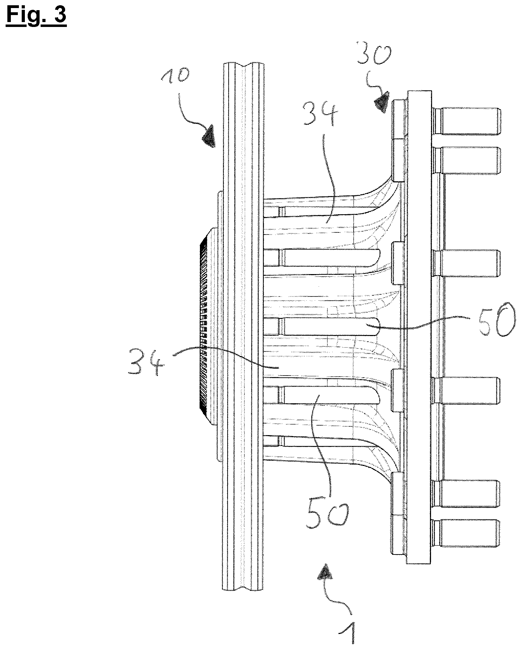

In **Figur 3** ist eine Außenansicht einer Bremsscheibenanordnung 1 gezeigt. Die Bremsscheibenanordnung 1 weist dabei eine Vielzahl von Verbindungsmitteln 50 auf, welche sich alternierend jeweils zumindest teilweise zwischen Rippen 34 der Nabe 30 erstrecken.

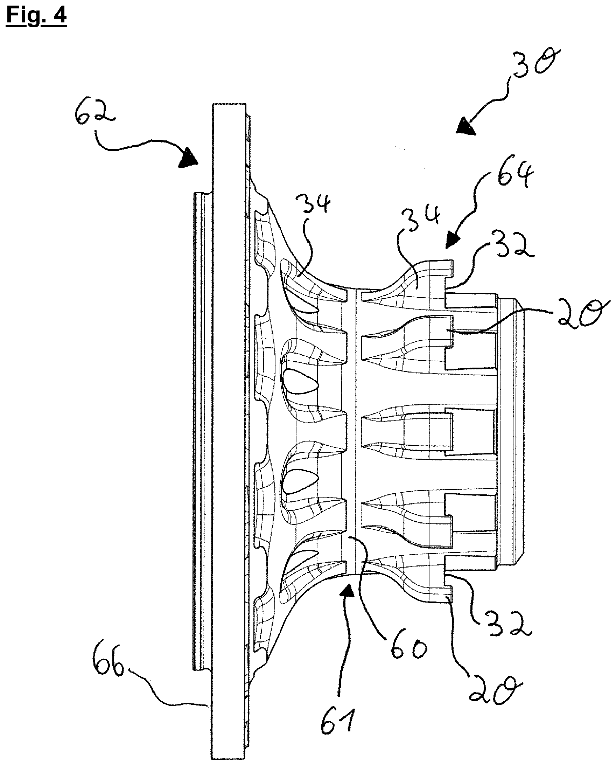

In **Figur 4** ist eine Nabe 30 zu sehen. Diese Nabe 30 verfügt über einen Bremsscheibenanschlussbereich 64, einen Zwischenbereich 61 und einen Kragbereich 62. Der Zwischenbereich 61 ist in Richtung der Rotationsachse zwischen dem Bremsscheibenanschlussbereich 64 und dem Kragbereich 62 angeordnet und verbindet diese beiden Bereiche miteinander. Der Kragbereich 62 verfügt über eine Radanlagenfläche 66, dessen nach außen weisende Normale vom Bremsscheibenanschlussbereich 64 weg weist und parallel zu der Rotationsachse A ist. Die Nabe 30 verfügt im Kragbereich 62 über Rippenelemente 34. Diese Rippenelemente 34 erstrecken sich jedoch nicht über den Zwischenbereich 61 ausbildet. In einer gedachten Verlängerung zu dem im Kragbereich 62 angeordneten Rippen 34 erstreckt sich jedoch im Bremsscheibenanschlussbereich 64 jeweils ebenfalls eine Rippe 34. Diese Rippen 34 im Bremsscheibenanschlussbereich 64 bilden jeweils eine Verbindungsfläche 32 aus, welche in Radialrichtung R nach außen jeweils durch einen Zentriervorsprung 20 begrenzt sind.

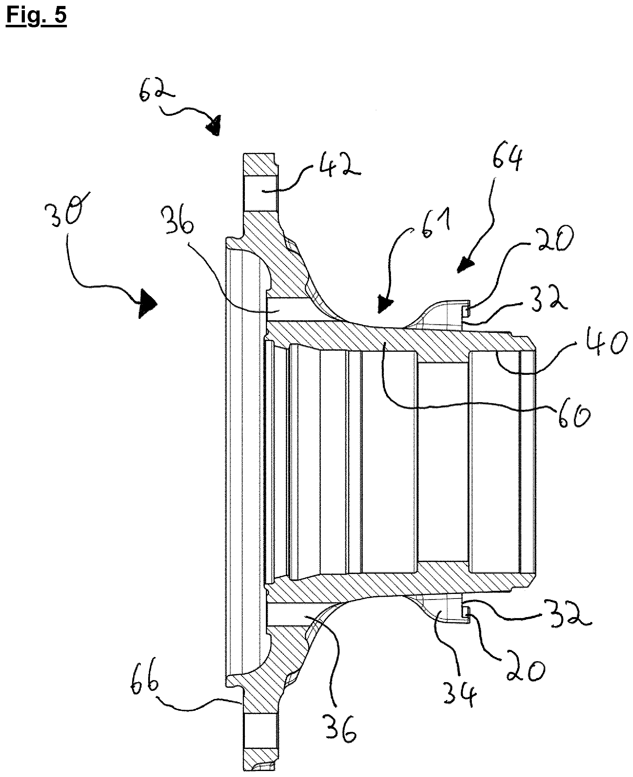

In **Figur 5** ist eine Schnittansicht einer Nabe 30 gezeigt, welche prinzipiell zu der in der Figur 4 dargestellten Ausführungsform passen kann. Wie aus der Figur 5 ersichtlich, erstrecken sich die Verbindungsöffnungen 36 vollständig durch den Kragbereich 62 der Nabe 30. Neben diesen Verbindungsöffnungen 36 verfügt der Kragbereich 62 auch noch über Radbolzenaufnahmen 42, wobei die Erstreckungsrichtung der Radbolzenaufnahmen 42 parallel zu der Erstreckungsrichtung der Verbindungsöffnungen 36 ist. Neben dem Kragbereich 62 verfügt die Nabe 30 auch noch über einen Zwischenbereich 61 sowie über einen Bremsscheibenanschlussbereich 64. Der Zwischenbereich 61 ist vollständig durch den Kragbereich 60 ausgebildet, von dem aus sich jeweils der Kragbereich 62 und der Bremsscheibenanschlussbereich 64 erstrecken. Der Bremsscheibenanschlussbereich 64 ist in Umfangsrichtung U gesehen nicht zusammenhängend ausgebildet, sondern wird jeweils durch einzelne Rippen 34 gebildet, welche sich in Radialrichtung vom Kernbereich 60 aus erstrecken. Der Kernbereich 60 bildet zumindest eine Radanlagenfläche 66 aus.

### Bezugszeichenliste:

- 1: - Bremsscheibenanordnung
- 10: - Bremsscheibe
- 12: - Anlagefläche
- 14: - Montagefläche
- 16: - Montageöffnung
- 20: - Zentriervorsprung
- 30: - Nabe
- 32: - Verbindungsfläche
- 34: - Rippe
- 36: - Verbindungsöffnung
- 40: - Lageranlagenfläche
- 42: - Radbolzenaufnahme
- 50: - Verbindungsmittel
- 60: - Kernbereich
- 61: - Zwischenbereich
- 62: - Kragbereich
- 64: - Bremsscheibenanschlussbereich
- 66: - Radanlagefläche
- A: - Rotationsachse
- U: - Umfangsrichtung
- R: - Radialrichtung

## Patentansprüche

1. Bremsscheibenanordnung (1) umfassend eine Bremsscheibe (10), eine Nabe (30) und zumindest ein Verbindungsmittel (50),
wobei die Bremsscheibenanordnung (1) dazu ausgelegt ist, um eine Rotationsachse (A) in Umfangsrichtung (U) zu rotieren,
wobei die Bremsscheibe (10) eine Anlagefläche (12) und eine Montagefläche (14) aufweist,
wobei die Nabe (30) eine Verbindungsfläche (32) und eine Verbindungsöffnung (36) aufweist,
wobei eine Montageöffnung (16) sich von der Montagefläche (14) aus erstreckt,
wobei die Anlagefläche (12) dazu ausgelegt ist, mittelbar/unmittelbar mit der Verbindungsfläche (32) der Nabe (30) zu kontaktieren,
wobei das Verbindungsmittel (50) dazu ausgelegt ist, sich zumindest teilweise in der Montageöffnung (16) und der Verbindungsöffnung (36) zu erstrecken,
**dadurch gekennzeichnet, dass** die Montagefläche (14) nabenkontaktfrei ist.

2. Bremsscheibenanordnung (1) gemäß Anspruch 1,
wobei die Nabe (30) einen Kernbereich (60), einen Kragbereich (62) und einen Bremsscheibenanschlussbereich (64) aufweist,
wobei der Kragbereich (62) und der Bremsscheibenanschlussbereich (64) sich radial in Richtung einer Radialrichtung (R) vom Kernbereich (60) erstrecken,
wobei der Kragbereich (62) eine Radanlagefläche (66) und mindestens eine Verbindungsöffnung (36), bevorzugt alle Verbindungsöffnungen (36) aufweist,
wobei der Bremsscheibenanschlussbereich (64) zumindest eine Anlagefläche (12), bevorzugt alle Anlagenflächen (12), aufweist.

3. Bremsscheibenanordnung (1) Anspruch 2,
wobei der Kernbereich (60) einen Zwischenbereich (61) ausbildet, welcher in Richtung der Rotationsachse (A) zwischen dem Kragbereich (62) und dem Bremsscheibenanschlussbereich (64) liegt,
wobei der Zwischenbereich (61) insbesondere rippenfrei ausgebildet ist.

4. Bremsscheibenanordnung (1) gemäß Anspruch 3,
wobei der Zwischenbereich (61) im Vergleich zu dem Kragbereich (62) und/oder im Vergleich zu dem Bremsscheibenanschlussbereich (64) eine verjüngte Außengeometrie aufweist.

5. Bremsscheibenanordnung (1) gemäß einem der vorhergehenden Ansprüche, wobei die Nabe (30), insbesondere im Zwischenbereich (61), in zumindest einer Schnittebene, dessen Normale parallel zur Rotationsachse (A) ist, einen Querschnitt ausbildet, der eine kreisförmige Außenkontur um die Rotationsachse (A) aufweist.

6. Bremsscheibenanordnung (1) gemäß einem der vorhergehenden Ansprüche, wobei die Nabe (30) Rippen (34) aufweist, welche bevorzugt in Richtung der Radialrichtung (R) und/oder in Richtung der Rotationsachse (A) verlaufen, wobei zumindest eine Verbindungsfläche (32) einen Teil jeweils einer Rippe (34) ausbildet,
wobei diese Rippen (34) sich bevorzugt lediglich in dem Bremsscheibenanschlussbereich (64) erstrecken.

7. Bremsscheibenanordnung (1) gemäß einem der vorhergehenden Ansprüche, wobei die Nabe (30) zumindest einen Zentriervorsprung (20) aufweist, wobei der Zentriervorsprung (20) vorteilhafterweise eine Verbindungsfläche (32) in Richtung der Radialrichtung (R), insbesondere nach außen, begrenzt.

8. Bremsscheibenanordnung (1) gemäß einem der vorhergehenden Ansprüche, wobei die Nabe (30) eine Vielzahl von Verbindungsflächen (32) aufweist, wobei bevorzugt jeder der Verbindungsflächen (32) in Richtung der Radialrichtung (R) durch einen Zentriervorsprung (20), insbesondere nach außen, begrenzt ist.

9. Bremsscheibenanordnung (1) gemäß einem der vorhergehenden Ansprüche, wobei die Bremsscheibe (10) in Richtung der Rotationsachse (A) und/oder in eine Radialrichtung (R) hervorstehende Vorsprünge aufweist,
wobei zumindest eine Montageflächen (14) einen Teil eines Vorsprungs ausbildet, wobei die Montagefläche (14) insbesondere eine berandende Stirnfläche für den Vorsprung in Richtung der Rotationsachse (A) ausbildet.

10. Bremsscheibenanordnung (1) gemäß Anspruch 9,
wobei die Vorsprünge mit einer komplementär ausgebildeten Verzahnung der Nabe (30) in Eingriff bringbar sind.

11. Bremsscheibenanordnung (1) gemäß Anspruch 10,
wobei die Verzahnung der Bremsscheibe (10) ein Spiel in Umfangsrichtung (U) zu der Verzahnung der Nabe (30) aufweist, insbesondere zwischen 0,1 mm und 2 mm und/oder
wobei die Polygonverbindung ein Spiel in Umfangsrichtung (U) aufweist, insbesondere zwischen 0,1 mm und 2 mm.

12. Bremsscheibenanordnung (1) gemäß einem der vorhergehenden Ansprüche, wobei das Verhältnis des mittlere Abstands (R2) der Anlagefläche (12) von der Rotationsachse (A) zu dem mittleren Abstand (R1) der Montageöffnung (16) von der Rotationsachse (A) in einem Bereich von 0,6 bis 1,5, bevorzugt in einem Bereich von 0,8 bis 1,2 und besonders stark bevorzugt in einem Bereich von 0,9 bis 1,1 liegt.

13. Bremsscheibenanordnung (1) gemäß einem der vorhergehenden Ansprüche, wobei die Bremsscheibe (10) in Richtung der Radialrichtung (R), zumindest in einem nicht montierten Zustand, insbesondere von der Radnabe (30) weg, gebogen und/oder v-förmig und/oder geschirmt ausgebildet ist.

14. Bremsscheibenanordnung (1) gemäß einem der vorhergehenden Ansprüche, wobei das Verhältnis der maximalen Erstreckung der Bremsscheibe (10) in Richtung der Rotationsachse (A) zu der maximalen Erstreckung der Nabe (30) in Richtung der Rotationsachse (A) in einem Verhältnis im Bereich von 0,07 bis 0,5, bevorzugt im Bereich von 0,1 bis 0,3 und besonders stark bevorzugt in einem Bereich von 0,15 bis 0,25 liegt.

15. Bremsscheibenanordnung (1) gemäß einem der vorhergehenden Ansprüche, wobei das Verhältnis der maximalen Erstreckung des Verbindungsmittels (50) zu der maximalen Erstreckung der Nabe (30) in Richtung der Rotationsachse (A) in einem Verhältnis im Bereich von 0,3 bis 1,1, bevorzugt in einem Bereich von 0,5 bis 0,95 und besonders stark bevorzugt in einem Bereich von 0,7 bis 0,85 liegt.

## Claims

1. A brake disc arrangement (1) comprising a brake disc (10), a hub (30) and at least one connection means (50),
wherein the brake disc arrangement (1) is adapted to rotate about an axis of rotation (A) in the circumferential direction (U),
wherein the brake disc (10) has a contact surface (12) and a mounting surface (14),
wherein the hub (30) has a connection surface (32) and a connection opening (36),
wherein a mounting opening (16) extends from the mounting surface (14),
wherein the contact surface (12) is adapted to indirectly/directly contact the connection surface (32) of the hub (30),
wherein the connection means (50) is adapted to extend at least partially in the mounting opening (16) and the connection opening (36),
**characterized in that** the mounting surface (14) is free of hub contact.

2. The brake disc arrangement (1) according to claim 1,
wherein the hub (30) comprises a core portion (60), a cantilever portion (62) and a brake disc connection portion (64),
wherein the cantilever portion (62) and the brake disc connection portion (64) extend radially in a radial direction (R) from the core portion (60),
wherein the cantilever portion (62) comprises a wheel contact surface (66) and at least one connection opening (36), preferably all connection openings (36),
wherein the brake disc connection portion (64) comprises at least one contact surface (12), preferably all contact surfaces (12).

3. The brake disc arrangement (1) according to claim 2,
wherein the core portion (60) forms an intermediate portion (61) which lies in the direction of the axis of rotation (A) between the cantilever portion (62) and the brake disc connection portion (64),
wherein the intermediate portion (61) is formed in particular without ribs.

4. The brake disc arrangement (1) according to claim 3,
wherein the intermediate portion (61) has a tapered outer geometry compared to the cantilever portion (62) and/or compared to the brake disc connection portion (64).

5. The brake disc arrangement (1) according to any one of the preceding claims,
wherein the hub (30), in particular in the intermediate portion (61), in at least one cutting plane, the normal of which is parallel to the axis of rotation (A), forms a cross-section which has a circular outer contour around the axis of rotation (A).

6. The brake disc arrangement (1) according to any one of the preceding claims,
wherein the hub (30) has ribs (34) which preferably run in the direction of the radial direction (R) and/or in the direction of the axis of rotation (A), wherein at least one connection surface (32) forms part of a respective rib (34),
wherein these ribs (34) preferably extend only in the brake disc connection portion (64).

7. The brake disc arrangement (1) according to any one of the preceding claims,
wherein the hub (30) has at least one centring projection (20),
wherein the centring projection (20) advantageously delimits a connection surface (32) in the direction of the radial direction (R), in particular outwards.

8. The brake disc arrangement (1) according to any one of the preceding claims,
wherein the hub (30) has a plurality of connection surfaces (32),
wherein preferably each of the connection surfaces (32) is bounded in the direction of the radial direction (R) by a centring projection (20), in particular outwardly.

9. The brake disc arrangement (1) according to any one of the preceding claims,
wherein the brake disc (10) has projections projecting in the direction of the axis of rotation (A) and/or in a radial direction (R),
wherein at least one mounting surface (14) forms a part of a projection,
wherein the mounting surface (14) forms in particular an edging end face for the projection in the direction of the axis of rotation (A).

10. The brake disc arrangement (1) according to claim 9,
wherein the projections are engageable with a complementary toothing of the hub (30).

11. The brake disc arrangement (1) according to claim 10,
wherein the toothing of the brake disc (10) has a play in the circumferential direction (U) relative to the toothing of the hub (30), in particular between 0.1 mm and 2 mm and/or
wherein the polygon connection has a play in the circumferential direction (U), in particular between 0.1 mm and 2 mm.

12. The brake disc arrangement (1) according to any one of the preceding claims,
wherein the ratio of the mean distance (R2) of the contact surface (12) from the axis of rotation (A) to the mean distance (R1) of the mounting opening (16) from the axis of rotation (A) is in a range of 0.6 to 1.5, preferably in a range of 0.8 to 1.2 and more preferably in a range of 0.9 to 1.1.

13. The brake disc arrangement (1) according to any one of the preceding claims,
wherein the brake disc (10) is bent and/or V-shaped and/or shielded in the direction of the radial direction (R), at least in a non-assembled state, in particular away from the wheel hub (30).

14. The brake disc arrangement (1) according to any one of the preceding claims,
wherein the ratio of the maximum extension of the brake disc (10) in the direction of the axis of rotation (A) to the maximum extension of the hub (30) in the direction of the axis of rotation (A) is in a range of 0.07 to 0.5, preferably in a range of 0.1 to 0.3 and more preferably in a range of 0.15 to 0.25.

15. The brake disc arrangement (1) according to any one of the preceding claims,
wherein the ratio of the maximum extension of the connection means (50) to the maximum extension of the hub (30) in the direction of the axis of rotation (A) is in a range of 0.3 to 1.1, preferably in a range of 0.5 to 0.95 and more preferably in a range of 0.7 to 0.85.

## Revendications

1. Ensemble de disque de frein (1) comprenant un disque de frein (10), un moyeu (30) et au moins un moyen de liaison (50),
l'ensemble de disque de frein (1) étant conçu pour tourner en direction circonférentielle (U) autour d'un axe de rotation (A),
le disque de frein (10) ayant une surface d'appui (12) et une surface de montage (14),
le moyeu (30) présentant une surface de liaison (32) et une ouverture de liaison (36),
une ouverture de montage (16) s'étendant à partir de la surface de montage (14),
la surface d'appui (12) étant conçue pour entrer en contact direct/indirect avec la surface de liaison (32) du moyeu (30),
le moyen de liaison (50) étant conçu pour s'étendre au moins partiellement dans l'ouverture de montage (16) et dans l'ouverture de liaison (36),
**caractérisé en ce que** la surface de montage (14) est sans contact avec le moyeu.

2. Ensemble de disque de frein (1) selon la revendication 1,
dans lequel le moyeu (30) comprend une zone de cœur (60), une zone en porte-à-faux (62) et une zone de raccordement de disque de frein (64),
la zone en porte-à-faux (62) et la zone de raccordement de disque de frein (64) s'étendent radialement dans le sens d'une direction radiale (R) à partir de la zone de cœur (60),
la zone en porte-à-faux (62) présente une surface d'appui de roue (66) et au moins une ouverture de liaison (36), de préférence toutes les ouvertures de liaison (36),
la zone de raccordement de disque de frein (64) présente au moins une surface d'appui (12), de préférence toutes les surfaces d'appui (12).

3. Ensemble de disque de frein (1) selon la revendication 2,
dans lequel la zone de cœur (60) forme une zone intermédiaire (61) qui est située, dans la direction de l'axe de rotation (A), entre la zone en porte-à-faux (62) et la zone de raccordement de disque de frein (64),
la zone intermédiaire (61) est en particulier réalisée sans nervure.

4. Ensemble de disque de frein (1) selon la revendication 3,
dans lequel la zone intermédiaire (61) présente une géométrie extérieure rétrécie par rapport à la zone en porte-à-faux (62) et/ou par rapport à la zone de raccordement de disque de frein (64).

5. Ensemble de disque de frein (1) selon l'une des revendications précédentes,
dans lequel le moyeu (30), en particulier dans la zone intermédiaire (61), forme une section transversale qui présente un contour extérieur circulaire autour de l'axe de rotation (A), dans au moins un plan de coupe dont la normale est parallèle à l'axe de rotation (A).

6. Ensemble de disque de frein (1) selon l'une des revendications précédentes,
dans lequel le moyeu (30) présente des nervures (34) qui s'étendent de préférence dans le sens de la direction radiale (R) et/ou dans le sens de l'axe de rotation (A),
au moins une surface de liaison (32) forme une partie d'une nervure (34) respective,
ces nervures (34) s'étendent de préférence uniquement dans la zone de raccordement de disque de frein (64).

7. Ensemble de disque de frein (1) selon l'une des revendications précédentes,
dans lequel le moyeu (30) présente au moins une saillie de centrage (20), la saillie de centrage (20) délimite avantageusement une surface de liaison (32) dans le sens de la direction radiale (R), en particulier vers l'extérieur.

8. Ensemble de disque de frein (1) selon l'une des revendications précédentes,
dans lequel le moyeu (30) comporte une pluralité de surfaces de liaison (32),
chacune des surfaces de liaison (32) est de préférence délimitée dans le sens de la direction radiale (R) par une saillie de centrage (20), en particulier vers l'extérieur.

9. Ensemble de disque de frein (1) selon l'une des revendications précédentes,
dans lequel le disque de frein (10) présente des saillies dépassant dans le sens de l'axe de rotation (A) et/ou dans une direction radiale (R),
au moins une surface de montage (14) forme une partie d'une saillie, la surface de montage (14) forme en particulier une surface frontale de bordure pour la saillie dans le sens de l'axe de rotation (A).

10. Ensemble de disque de frein (1) selon la revendication 9,
dans lequel les saillies peuvent être mises en prise avec une denture (38) du moyeu (30) réalisée de façon complémentaire.

11. Ensemble de disque de frein (1) selon la revendication 10,
dans lequel la denture du disque de frein (10) présente un jeu en direction circonférentielle (U) par rapport à la denture du moyeu (30), en particulier compris entre 0,1 mm et 2 mm, et/ou
la liaison polygonale présente un jeu en direction circonférentielle (U), en particulier compris entre 0,1 mm et 2 mm.

12. Ensemble de disque de frein (1) selon l'une des revendications précédentes,
dans lequel le rapport de la distance moyenne (R2) de la surface d'appui (12) à l'axe de rotation (A) sur la distance moyenne (R1) de l'ouverture de montage (16) à l'axe de rotation (A) est compris dans une plage allant de 0,6 à 1,5, de préférence dans une plage allant de 0,8 à 1,2, et de manière particulièrement préférée dans une plage allant de 0,9 à 1,1.

13. Ensemble de disque de frein (1) selon l'une des revendications précédentes,
dans lequel, au moins dans un état non monté, le disque de frein (10) est réalisé en forme courbée dans le sens de la direction radiale (R), en particulier en éloignement du moyeu de roue (30), et/ou en forme de V et/ou de façon blindée.

14. Ensemble de disque de frein (1) selon l'une des revendications précédentes,
dans lequel le rapport de l'extension maximale du disque de frein (10) dans le sens de l'axe de rotation (A) sur l'extension maximale du moyeu (30) dans le sens de l'axe de rotation (A) est compris dans la plage allant de 0,07 à 0,5, de préférence dans la plage allant de 0,1 à 0,3, et de manière particulièrement préférée dans une plage allant de 0,15 à 0,25.

15. Ensemble de disque de frein (1) selon l'une des revendications précédentes,
dans lequel le rapport de l'extension maximale du moyen de liaison (50) sur l'extension maximale du moyeu (30) dans le sens de l'axe de rotation (A) est compris dans une plage allant de 0,3 à 1,1, de préférence dans une plage allant de 0,5 à 0,95, et de manière particulièrement préférée dans une plage allant de 0,7 à 0,85.
